# FASCICULE DE BREVET EUROPEEN

(11) **EP 0 719 595 B1**
(45) Date de publication et mention de la délivrance du brevet: **01.03.2000**
(21) Numéro de dépôt: 95203460.1
(22) Date de dépôt: 12.12.1995
(51) Int. Cl.: B05D 7/24, B05D 3/10, C08F 10/00, B01J 19/02, C08F 2/00, C09D 123/04, C09D 123/02, C09D 123/10

(54) **Procédé d'élaboration d'un revêtement de polyoléfine, substrat muni dudit revêtement, et son utilisation pour entrer en contact avec des poudres en mouvement**
Verfahren zur Herstellung von Polyolefin-Überzügen, damit beschichtete Substrate, und Verwendung in Berührung mit bewegten Pulvern
Process for manufacturing a polyolefin coating, substrate coated with that coating, and its use for contact with moving powders

(30) Priorité: 29.12.1994 FR 9415852; 29.12.1994 FR 9415853
(43) Date de publication de la demande: 03.07.1996
(73) Titulaire: ELF ATOCHEM S.A., 92800 Puteaux, Hauts-de-Seine (FR)
(72) Inventeur: Brun, Claude, F-64320 Idron (FR)

(56) Documents cités:
- EP-A- 0 376 654
- BE-A- 624 130
- DE-A- 1 504 109
- DE-B- 1 206 334
- FR-A- 918 147
- FR-A- 1 092 858
- FR-A- 1 215 101
- GB-A- 815 482
- LU-A- 44 179

## Description

La présente invention concerne un procédé d'élaboration d'un revêtement de polyoléfine sur un substrat.

On peut réaliser un revêtement par projection de polyoléfine en poudre sur un substrat chauffé à une température supérieure à la température de fusion de la polyoléfine. Une variante de ce procédé consiste à plonger un substrat chauffé dans un lit fluidisé de poudre de polyoléfine. Ce type de procédé est difficile à mettre en oeuvre lorsque les substrats à revêtir sont de grande dimension ou lorsque l'on souhaite revêtir seulement une partie du substrat. De plus, lorsque c'est la paroi interne d'un réacteur chimique que l'on souhaite revêtir, l'accès par l'opérateur ou l'intervention de l'opérateur pourront ne pas être possible. Par ailleurs ce type de procédé mène à des revêtements peu adhérents, notamment parcequ'ils sont très épais, et d'épaisseur peu uniforme.

Notamment, le brevet français n° 1.215.101 décrit un procédé d'élaboration d'un revêtement sur un métal en plusieurs étapes :
a) mise en contact du métal avec une suspension de particules de polyoléfine, puis
b) séparation du métal de la suspension, puis
c) chauffage du métal portant des particules de polyoléfine afin de fondre celles-ci pour obtenir un revêtement de polyoléfine sur le métal.

De plus, la demande allemande DE 12 06 334 décrit un procédé d'élaboration d'un revêtement sur un substrat par polymérisation en phase gazeuse d'au moins une oléfine en présence d'un substrat.

Il a maintenant été trouvé un procédé d'élaboration d'un revêtement de polyoléfine sur un substrat permettant de résoudre les problèmes ci-dessus mentionnés des techniques antérieures.

Le procédé selon l'invention mène à des revêtements très adhérents au substrat sans qu'il ne soit nécessaire d'utiliser un adhésif ou liant entre le revêtement et le substrat. Les revêtements sont d'épaisseur uniforme même pour des substrats de grande dimension.

Le procédé selon l'invention est particulièrement adapté au recouvrement des parois internes et des éléments internes de corps creux comme des cuves, des réacteurs chimiques ou des tuyaux.

On peut souhaiter recouvrir les parois internes ainsi que l'agitateur et éventuellement les contrepales de réacteurs chimiques ou la parois interne de tuyaux lorsque l'on veut protéger ces parois, par exemple, de la corrosion.

Le procédé selon l'invention est particulièrement intéressant pour revêtir des pièces destinées à entrer en contact avec des particules, en particulier des particules contenant un polymère ou un copolymère, et plus particulièrement lorsque ce polymère ou copolymère est issu d'au moins une oléfine comme monomère.

On constate en effet qu'en l'absence de revêtement adapté, de telles pièces peuvent se recouvrir d'aggrégats de ces particules suite à des phénomènes d'accumulation de charges électrostatiques. Le revêtement obtenu par le procédé selon l'invention et appliqué au moins à l'endroit où risque de se former ces aggrégats, permet de réduire, voire d'inhiber complètement ces phénomènes qui risquent de nuire au fonctionnement optimal des installations dont lesdites pièces font partie.

Une telle pièce peut être un tuyau à l'intérieur duquel on fait circuler une poudre à l'aide d'un gaz. Dans ce cas, on pourra appliquer le procédé selon l'invention à la surface interne du tuyau.

Une telle pièce peut être une cuve ou un reacteur destiné à contenir un lit fluidisé ou agité de poudres. Le réacteur peut être un réacteur de polymérisation, par exemple de polyoléfines, en phase gazeuse ou en phase liquide. Dans ce cas, on pourra appliquer le procédé selon l'invention à la paroi interne de la cuve ou du réacteur et à leurs accessoires internes tels que par exemple leurs éventuels agitateurs et/ou contrepales.

Le procédé selon l'invention est caractérisé par les étapes suivantes :
a) mise en contact du substrat avec une composition liquide comprenant un catalyseur de polymérisation des oléfines, puis
b) séparation du substrat de ladite composition liquide, puis
c) polymérisation en phase gazeuse d'au moins une oléfine en présence dudit substrat.

Préalablement à la mise en contact de l'étape a), la surface du substrat à revêtir est de préférence débarassée de toute impureté organique et/ou minérale et en particulier de toute humidité. Le substrat peut être nettoyé par un solvant organique choisi parmi les hydrocarbures aliphatiques comme l'hexane, les hydrocarbures alicyclique comme le cyclohexane, les hydrocarbures aromatiques comme le toluène, puis séché sous un courant d'un gaz inerte comme l'azote ou l'argon, par exemple à la pression atmosphérique entre 50 et 90°C.

La composition liquide peut éventuellement être le catalyseur lui-même si celui-ci est liquide dans les conditions de mise en contact et s'il n'est pas trop aggressif à l'état pur vis-à-vis du substrat à revêtir. La composition liquide peut également être une solution de catalyseur. Par simplification, on considère que l'expression "solution de catalyseur" n'exclut pas le cas d'un catalyseur pur liquide, ce cas étant équivalent à celui ou la quantité de solvant est extrèmement faible.

La mise en contact peut être réalisée de différentes manières en fonction de la géométrie du substrat à revêtir. Cette mise en contact peut être réalisée par trempage dans la solution du catalyseur de polymérisation. Cette mise en contact peut également être réalisée par projection de la solution du catalyseur sur le substrat.

On peut réaliser la mise en contact en projetant la solution sous forme de gouttelettes sur le substrat, ces gouttelettes étant formées par l'intermédiaire d'une buse à laquelle la solution de catalyseur est amenée sous pression (aérosol ou spray).

Il n'est pas exclu de pouvoir réaliser la mise en contact par évaporation de la solution de catalyseur puis condensation de cette solution sur la pièce à revêtir, du moment que les tensions de vapeur des différents constituants de la solution de catalyseur le permettent sans que cette opération ne se traduise par une néfaste modification de la composition de la solution de catalyseur.

Dans le cas ou l'on se propose de revêtir les parois internes de cuves ou de réacteurs ainsi que leurs accessoirs internes, cette mise en contact peut être réalisée par remplissage de la cuve ou du réacteur par la solution de catalyseur ou par un mélange d'une charge solide et de la solution de catalyseur. Pour le cas où ce mélange constitue une suspension, c'est-à-dire que tout l'espace entre les différents éléments constituant la charge est rempli de solution de catalyseur, la présence de cette charge solide permet de réduire la quantité de solution de catalyseur nécessaire à la mise en contact.

Il n'y a pas de limite inférieure à la quantité de charge solide, du moment que le mélange charge solide / solution de catalyseur liquide contient suffisamment de liquide pour réaliser la mise en contact.

Lorsque la quantité de charge solide est tellement forte que le mélange charge solide / solution de catalyseur n'est plus une suspension, il est préférable d'ajuster le rapport masse de solution de catalyseur / masse de charge solide dans le mélange de façon à ce que la porosité de la charge soit remplie, c'est-à-dire saturée, par la solution de catalyseur. On peut notamment observer que le point de saturation de la charge solide est atteint lorsque le mélange charge solide / solution de catalyseur coule nettement plus difficilement.

La charge solide consiste généralement en un ensemble de particules et/ou de granulés dont le Dp50 peut par exemple être compris entre 50 et 3000 µm. Par Dp50 on désigne le diamètre en dessous duquel se trouve 50% en poids des particules et/ou granulés constituant la charge. De préférence, cette charge solide ne contient pas de particule de diamètre inférieure à 100 µm.

Lorsque la quantité de charge solide est tellement forte que le mélange charge solide/solution de catalyseur n'est plus une suspension, il est préférable que la charge solide présent un Dp50 allant de 500 à 2000 µm.

Lorsque la quantité de charge solide est tellement forte que le mélange charge solide/solution de catalyseur n'est plus une suspension, il est préférable que la charge solide présente une morphologie sphéroïdale à bonne coulabilité.

Pour 100 grammes de charge solide, on peut employer 15 à 100 ml de solution de catalyseur de façon à réaliser un mélange pour la mise en contact.

La charge solide peut être constituée de toute matière inerte vis-à-vis d'une part de la solution de catalyseur que l'on se propose d'utiliser et vis-à-vis d'autre part du substrat à revêtir. Cette charge solide peut être en polyoléfine comme en polyéthylène ou polypropylène, ou en copolymère d'alpha-oléfines.

Pour le cas où l'on souhaite revêtir les parois internes d'une cuve ou d'un réacteur ainsi que ses éventuels accessoires internes, et que l'on a introduit dans la cuve ou le réacteur une solution de catalyseur avec ou sans charge, on peut améliorer la mise en contact entre la paroi interne et la solution de catalyseur en agitant l'intérieur de la cuve ou du réacteur. Cette agitation est en particulier indispensable lorsqu'on a introduit dans la cuve ou le réacteur un mélange de solution de catalyseur et de charge, et que ce mélange ne constitue pas une suspension au sens donné ci-dessus. Bien entendu, l'agitation devra être suffisamment douce pour ne pas provoquer l'attrition de la charge ni même de la paroi interne de la cuve ou du réacteur.

Pour la mise en oeuvre du procédé selon l'invention, on peut utiliser comme solution de catalyseur une solution comprenant :
I) Un catalyseur constitué d'un système catalytique comprenant
   la) Un dérivé d'un métal de transition M, et
   lb) un cocatalyseur capable d'activer le métal de transition, et
II) un solvant.

Le dérivé d'un métal de transition, le cocatalyseur et le solvant doivent être choisis de façon à ce qu'ils forment une solution lorsqu'ils sont mélangés en vue de former la solution du composé du métal de transition dans la concentration souhaitée en composé du métal de transition et en cocatalyseur.

Comme dérivé d'un métal de transition M, on peut utiliser un composé de formule MLx dans laquelle M représente un métal de transition, L représente un ligand coordiné au métal de transition, x représente un nombre égal à la valence du métal de transition. Dans le composé de formule MLx, le métal de transition M a autant de ligands L, lesquels peuvent être identiques ou différents, que sa valence. De préférence, au moins un ligand L est un groupement au squelette de type cycloalcadiényle, c'est-à-dire soit le groupement cycloalcadiényle lui-même, soit un groupement cycloalcadiényle substitué, par exemple par un groupement hydrocarboné. Lorsque le composé de formule MLx contient au moins deux groupements au squelette de type cycloalcadiényle, au moins deux de ces groupements peuvent être liés entre eux par un radical bivalent.

Au moins un ligand L peut être choisi parmi les groupements de formule -O-,-S-, -NR³- ou -PR³- dont une des valences libres est liée à l'atome de métal de transition M et l'autre valence libre est liée à un radical bivalent, lui-même lié à un ligand L au squelette cycloalcadiényle, dans lesquelles R³ représente l'hydrogène ou un groupement choisi parmi les groupements silyl, alkyl ou aryl, ces deux derniers groupements étant éventuellement halogénés.

Au moins un ligand L peut être choisi parmi les groupements de formule -OR⁴, -SR⁴, -NR⁴₂ ou -PR⁴₂ dont la valence libre est liée à un radical bivalent, lui-même lié à un ligand L au squelette cycloalcadiényle, dans lesquelles R⁴ représente l'hydrogène ou un groupement choisi parmi les groupements silyl, alkyl ou aryl ces deux derniers groupements étant éventuellement halogénés.

Chaque radical bivalent peut être un radical alkylène comme le radical méthylène (-CH₂-), le radical éthylène (-CH₂CH₂-) ou triméthylène (-CH₂CH₂CH₂-), ce radical alkylène pouvant également être substitué, par exemple par au moins un groupement hydrocarboné, comme le radical isopropylidène. Ce radical bivalent peut être un groupement silylène (-SiH₂-) éventuellement substitué, par exemple par au moins un groupement hydrocarboné comme c'est le cas pour le radical diméthylsilylène ou diphénylsilylène.

De préférence, les ligands L au squelette cycloalcadiényle presentent un squelette cyclopentadiényle, c'est-à-dire sont des groupements cyclopentadiényles ou sont des groupements cyclopentadiényles substitués comme par exemple le groupement fluorényle ou le groupement indényle.

Les ligands L différents de ceux précédemment cités peuvent être des groupements hydrocarbonés comportant de 1 à 12 atomes de carbone, des halogènes, ou l'hydrogène. Comme groupement hydrocarboné, on peut citer les groupements alkyle, cycloalkyle, aryle, aralkyle, ce qui inclut les groupements méthyle, éthyle, propyle, isopropyle, butyle, cyclopentyle, cyclohexyle, phényle, tolyle, benzyle. Comme halogène, on peut citer le fluor, le brome, l'iode, le chlore.

Plusieurs composés de formule MLx peuvent être présents au sein de la solution de catalyseur.

Parmi les composés de formule MLx, ceux pour lesquels M représente le zirconium, le titane ou le hafnium sont préférés.

A titre d'exemple, le composé de formule MLx peut être choisi parmi les composés suivants :
bis(cyclopentadiényl)dichlorozirconium,
éthylènebis(4,5,6,7-tétrahydro-1-indényl)dichlorozirconium,
éthylènebis(indényl)dichlorozirconium,
isopropylydène(cyclopentadiényl, fluorényl)dichlorozirconium,
diméthylsily(3-tert-butyl-cyclopentadiényl, fluorényl)dichlorozirconium,
bis(cyclopentadiényl)diméthylzirconium,
éthylènebis(4,5,6,7-tétrahydro-1-indényl)diméthylzirconium,
éthylènebis(indényl)diméthylzirconium,
isopropylydène(cyclopentadiényl, fluorényl)diméthylzirconium,
diméthylsily(3-tert-butyl-cyclopentadiényl, fluorényl)diméthylzirconium,
diméthylsily(tétraméthylcyclopentadiényl, tert-butyl-amino)dichlorozirconium,
ce dernier composé ayant pour formule (CH₃)₂Si((CH₃)₄C₅, (CH₃)₃CN)ZrCl₂, diméthylsily(tétraméthylcyclopentadiényl, tert-butyl-amino)diméthyltitane, ce composé ayant pour formule (CH₃)₂Si((CH₃)₄C₅, (CH₃)₃CN)Ti(CH₃)₂, dichlorure de diméthylsilanediylbisindényl zirconium.

Le dérivé d'un métal de transition peut également être choisi parmi les composés de formule Ti(OR)₄₋ₓClₓ dans laquelle R représente un radical alkyle contenant de 1 à 8 atomes de carbone et x représente un nombre entier allant de 0 à 3.

Généralement, le dérivé d'un métal de transition est présent dans la solution de catalyseur à raison de 1 millimole de métal de transition par litre de solution jusqu'à la saturation du solvant choisi, et en particulier à raison de 5 à 50 millimoles de métal de transition par litre de solution.

Le cocatalyseur peut être un aluminoxane linéaire, de formule 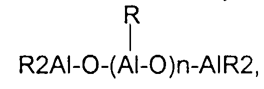 ou cyclique de formule

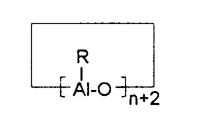

R représentant un radical alkyl comprenant de un à six atomes de carbone, et n représentant un nombre entier allant de 2 à 40, de préférence de 10 à 20. L'aluminoxane peut comporter des groupements R de nature différente. De préférence, les groupements R représentent tous des groupements méthyl.

On peut également choisir le cocatalyseur d'un composé de formule Ti(OR)₄₋ₓClₓ, parmi les dérivés organiques de l'aluminium et en particulier les composés de formule R¹R²R³Al dans laquelle R¹, R² et R³ pouvant être identiques ou différents, représentent chacun, soit un atome d'halogène comme le chlore ou le brome, soit un groupe alkyl contenant de 1 à 20 atomes de carbone, l'un au moins de R¹, R² ou R³ représentant un groupe alkyl. A titre d'exemple de composé adapté, on peut citer le dichlorure ou dibromure d'éthylaluminium, le dichlorure ou dibromure d'isobutylaluminium, le chlorure ou bromure de diéthylaluminium, le chlorure ou bromure de di-n-propylaluminium, le chlorure ou bromure de diisobutylaluminium. De préférence aux composés précités, on utilise un trialkylaluminium tel que le tri-n-hexylaluminium, le triisobutylaluminium, le triméthylaluminium, ou le triéthylaluminium.

Généralement, lorsque le cocatalyseur contient des atomes d'aluminium, le cocatalyseur est présent dans la solution de catalyseur en quantité telle que le rapport atomique Al/M aille de 5. 10⁴ à 1. De préférence, lorsque le dérivé d'un métal de transition est un composé de formule MLx, le rapport Al/M va de 5. 10⁴ à 10. De préférence, lorsque le dérivé d'un métal de transition est un composé de formule Ti(OR)₄₋ₓClₓ, le rapport Al/M va de 200 à 1.

Tout solvant, inerte vis-à-vis du substrat à revêtir, vis-à-vis du catalyseur et vis-à-vis de l'éventuelle charge, solubilisant comme ci-avant mentionné le catalyseur, peut convenir.

Le solvant de la solution de catalyseur peut être choisi parmi les solvants non protiques, et de préférence non polaires. Le solvant de ladite solution peut être choisi parmi les hydrocarbures aliphatiques linéaires ou ramifiés et contenant de 5 à 20 atomes de carbone comme le n-pentane, le n-hexane, le n-heptane, ou les hydrocarbures alicycliques éventuellement substitués et contenant de 6 à 20 atomes de carbone comme le cyclohexane, ou de préférence les hydrocarbures aromatiques éventuellement substitués contenant de 6 à 20 atomes de carbone comme le toluène, le benzène, le xylène, l'éthylbenzène. Le toluène est le solvant préféré.

La mise en contact du substrat avec la solution de catalyseur ayant été effectuée, on sépare le substrat du milieu utilisé pour la mise en contact. Dans le cas où, dans l'optique de revêtir les parois internes d'une cuve ou d'un réacteur, on aurait, pour cette mise en contact, rempli la cuve ou le réacteur par la solution de catalyseur ou par un mélange charge solide/solution de catalyseur, ceci signifie simplement que l'on vide la cuve ou le réacteur. Dans le cas où la mise en contact aurait été effectuée par trempage du substrat dans la solution de catalyseur, la séparation du substrat d'avec le milieu utilisé pour la mise en contact est simplement réalisée en sortant le substrat de la solution de catalyseur.

Dans tous les cas, pour cette séparation du substrat d'avec le milieu utilisé pour la mise en contact, il n'est pas nécessaire d'aller au delà de l'élimination de l'excédent de liquide pouvant ruisseler à la surface du substrat.

Après séparation du substrat d'avec la solution de catalyseur, on procède à une polymérisation en phase gazeuse d'au moins une oléfine en présence dudit substrat. Le terme polymérisation recouvre, dans le cadre de la présente demande, les réactions de copolymérisation. Pour cette polymérisation, le substrat peut être placé dans un réacteur de polymérisation des oléfines en phase gazeuse. Si ce sont les parois internes d'une cuve ou d'un réacteur chimique que l'on se propose de revêtir, la polymérisation peut être réalisée à l'intérieur de cette cuve ou de ce réacteur par introduction à l'intérieur de ce réacteur des monomères gazeux à polymériser.

Les conditions de mise en oeuvre de la polymérisation en phase gazeuse, notamment température, pression, injection de l'oléfine ou des oléfines, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf -5)°C, et sous une pression telle que l'oléfine ou les oléfines soient essentiellement en phase vapeur.

On peut faire intervenir dans le milieu de polymérisation un agent de transfert de chaîne, de manière à contrôler l'indice de fusion du polymère ou copolymère à produire. L'agent de transfert de chaînes préféré est l'hydrogène, que l'on utilise en quantité pouvant aller jusqu'à 90%, et se situant de préférence entre 0,1 et 60% en mole de l'ensemble oléfines et hydrogène amené au réacteur.

Les oléfines pouvant être utilisées pour la polymérisation, sont par exemple les oléfines comportant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, ou leurs mélanges. Le terme polymérisation dont il est fait usage dans la présente demande recouvre donc des réactions de copolymérisation, et le terme polymère recouvre des copolymères.

Parmi les mélanges d'alpha-oléfine, on préfère un mélange d'éthylène et d'au moins une alpha-oléfine contenant de trois à six atomes de carbone, le pourcentage d'éthylène dans le mélange étant généralement supérieur à 90% en poids.

Au moins un donneur d'électrons peut être ajouté au milieu de polymérisation. Ce donneur d'électron peut être par exemple choisi parmi les bases de lewis, les esters et polyesters d'acides oxygénés, les éthers et polyéthers, les amines, les composés du silicium tels que les silanes et les alkylakoxysilanes de formule SiR¹R²(OR)₂, SiR¹(OR)₃ ou SiR¹R²R³(OR), dans lesquelles R, R¹, R², R³ pouvant être identiques ou différents, sont des groupements hydrocarbonés contenant de 1 à 12 atomes de carbone, ainsi que parmi les composés du phosphore tels que les phosphates et les phosphonates, les préférés étant les esters ou polyesters alkylés d'acide aromatique, les mono ou diéthers d'alkyle, les alkoxysilanes et les alkylalkoxysilanes.

Suivant la nature du catalyseur utilisé, et en particulier de sa sensibilité à l'humidité, il convient de protéger de l'air ambiant le substrat dès son nettoyage de surface et la solution de catalyseur, par exemple en effectuant toutes les étapes du procédé selon l'invention sous une atmosphère inerte, comme par exemple une atmosphère d'azote ou d'argon. Ces précautions sont en particulier à prendre dans le cas des catalyseurs de formule MLx ou Ti(OR)₄₋ₓClₓ précédemment mentionnés. Ainsi, pour ces catalyseurs, l'enceinte dans laquelle doit être réalisée la mise en contact contient de préférence moins de 10, et de manière encore préférée moins de 1 ppm d'eau.

Des revêtements sur tous types de substrat peuvent être réalisés grâce au procédé selon l'invention. Il est préférable que le substrat soit bien mouillable par la solution de catalyseur que l'on se propose d'utiliser pour la mise en contact. Ceci peut en particulier se vérifier par des tests de routine à la portée de l'homme du métier. Pour ce faire, il suffit de poser une goutte de la solution de catalyseur en surface du substrat que l'on se propose de revêtir et de mesurer l'angle que forme la tangente à la goutte au point de contact goutte/substrat d'une part avec le substrat d'autre part. Il est préférable que la goutte tende à s'étaler sur le substrat à revêtir..

Le procédé selon l'invention peut en particulier être mis en oeuvre pour revêtir les métaux comme le cuivre et ses alliages, l'aluminium et ses alliages, la fonte, les aciers au carbone, les aciers inoxydables comme les aciers au nickel et/ou au chrome, lesdits aciers pouvant contenir du molybdène, le nickel et ses alliages comme les alliages dits Inconel, le chrome et ses alliages. Comme acier, on peut en particulier citer les aciers 304, 316, 316L.

L'épaisseur du revêtement obtenu par le procédé selon l'invention peut varier en des proportions pratiquement infinies. En effet, un revêtement très fin, par exemple d'épaisseur inférieure à 10 µm pourra être obtenu par contrôle de la quantité de monomère à polymériser lors de l'étape c). Un revêtement de forte épaisseur, par exemple d'épaisseur supérieure à 50 µm pourra être obtenu en répétant plusieurs fois successivement le procédé selon l'invention. Généralement, le procédé selon l'invention appliqué une seule fois, permet, si l'on ne limite pas volontairement la quantité de monomère introduit à l'étape c), de réaliser un revêtement d'épaisseur inférieure à 50 µm et plus généralement comprise entre 10 et 50 µm.

L'invention concerne également l'utilisation d'une pièce comprenant un substrat et un revêtement en polymère pour entrer en contact avec des particules de polyoléfine, le polymère constituant le revêtement comprenant des enchaînements de formule -CH₂-CHR-. Dans la présente demande, le terme polymère recouvre également des copolymères et le terme polyoléfine recouvre également des copolymères issus de la copolymérisation de différentes oléfines.

On constate que des pièces non revêtues et utilisées pour entrer en contact avec des particules de polyoléfine peuvent se recouvrir d'aggrégats de ces particules suite à des phénomènes d'accumulation de charges électrostatiques. L'utilisation selon l'invention à la place de l'utilisation de pièces non revêtues permet de réduire, voire d'inhiber complètement ces phénomènes qui risquent de nuire au fonctionnement optimal des installations dont lesdites pièces font partie.

Le problème de l'accumulation des charges électrostatiques se pose dans de nombreuses installations dans lesquelles des particules entrent en mouvement, et en particulier dans les installations dans lesquelles des particules de polyoléfine sont convoyées ou agitées, soit mécaniquement, soit par un liquide, soit par un gaz.

Le substrat des pièces concernées par l'invention peut être en tout type de matière et en particulier en métal comme le cuivre et ses alliages, l'aluminium et ses alliages, la fonte, les aciers au carbone, les aciers inoxydables comme les aciers au nickel et/ou au chrome, lesdits aciers pouvant contenir du molybdène, le nickel et ses alliages comme les alliages dits Inconel, le chrome et ses alliages. Comme acier, on peut en particulier citer les aciers 304, 316, 316L.

Une telle pièce peut être un tuyau à l'intérieur duquel on fait circuler une poudre de polyoléfine à l'aide d'un gaz ou d'un liquide. Une telle pièce peut être une cuve ou un réacteur destiné à contenir un lit fluidisé ou agité de poudres en présence d'un gaz ou d'un liquide, ainsi que les accessoires de ce réacteur comme son éventuel mobile d'agitation ou ses éventuelles contrepales. Ce réacteur peut être un réacteur de polymérisation d'oléfines en phase gazeuse.

L'effet bénéfique du revêtement de polymère commence dès que le revêtement présente une épaisseur monoatomique et même si ce revêtement est discontinu. Il n'y a pas de limite supérieure à l'épaisseur de ce revêtement sauf celles imposées par le fonctionnement normal de la pièce.

Généralement, un revêtement dont l'épaisseur est comprise entre 5 µm et 100 µm convient. Des revêtements d'épaisseur bien supérieure à 100 µm peuvent être utilisés.

Le revêtement peut être élaboré par simple liaison mécanique avec le substrat à revêtir, comme par exemple par vissage ou rivetage de plaques ou films de polymère sur ledit substrat. Si la géométrie du substrat le permet le revêtement peut être élaboré par trempage du substrat préalablement chauffée à une température supérieure au point de fusion du polymère dans un lit fluidisé de poudre dudit polymère.

On peut également élaborer ce revêtement en projetant une poudre de polymère sur le substrat à revêtir portée à une température supérieure au point de fusion dudit polymère.

Le revêtement peut également être élaboré par collage de plaques ou films de polymère sur le substrat à revêtir, étant entendu que l'utilisation d'une colle ou de tout autre tiers corps doit être compatible avec les conditions d'utilisation de la pièce comprenant le revêtement.

L'utilisation selon l'invention est caractérisée en ce que le polymère constituant le revêtement comprend des enchaînements de formule -CH₂-CHR- dans laquelle R représente un atome d'hydrogène ou un radical alkyle contenant de 1 à 10 atomes de carbone.

Bien entendu, de préférence, le polymère ne présente pas de propriété adhésive d'origine non-électrique vis-à-vis des particules en mouvement, c'est-à-dire, qu'il n'est pas capable de retenir lesdites particules par des aspérités de surface ou par interaction de nature physico-chimique comme par diffusion ou réaction chimique. Ceci peut se constater en vérifiant que le polymère ne retient pas les particules en mouvement lorsque ni le polymère ni les particules ne sont chargées électriquement.

A titre d'exemple, le polymère constituant le revêtement peut comprendre des motifs polyamide de formule -CO-NH-(CH₂)ₙ- dans laquelle n représente un nombre entier supérieur ou égal à 2, mais de préférence comprend des motifs de type polyoléfine. Le revêtement peut être en polyéthylène linéaire haute densité (densité > 0,950), en polymère ou copolymère d'alpha-oléfine de moyenne à très basse densité (0,9 < densité < 0,95) de type linéaire avec des branches courtes ou de type ramifié avec des branches longues et des branches courtes, en polypropylène ou copolymère du propylène et d'au moins une alpha-oléfine présentant un indice d'isotacticité supérieur à 60% en poids mesuré par le taux des triades mm par RMN, en polypropylène syndiotactique ou copolymère syndiotactique du propylène et d'au moins une alpha-oléfine présentant un indice de syndiotacticité supérieur à 60% en poids mesuré par le taux des triades rr par RMN.

De préférence, le revêtement est un polymère ou copolymère d'au moins une oléfine, et de manière encore préférée est entièrement issu de monomères appartenant à la famille des oléfines.

De manière encore préférée, le polymère constituant le revêtement et les particules de polyoléfine sont issus des mêmes monomères.

Un revêtement en polyoléfine peut également être élaboré par un procédé chimique comme celui faisant également l'objet de la présente invention et qui a été décrit ci-dessus.

Dans les exemples qui suivent, on décrit en particulier l'influence d'un revêtement de polyéthylène ou de polypropylène sur la tendance d'une poudre de polyéthylène ou de polypropylène à s'accrocher à la paroi et à l'agitateur d'un réacteur chimique agité. Pour mieux comparer les résultats, ceux-ci sont rassemblés dans les tableaux 1 et 2:
tableau 1: agitation d'une poudre de polyéthylène (PE) de haute densité dans un réacteur sans revêtement (exemple 5 ), avec un revêtement de polyéthylène (exemple 1), ou avec un revêtement de polypropylène (exemple 4 ).
tableau 2: agitation d'une poudre de polypropylène (PP) dans un réacteur sans revêtement (exemple 6 ), avec un revêtement de polyéthylène (exemple 2 ), ou avec un revêtement de polypropylène (exemple 3 ).

La distribution granulométrique des poudres utilisées dans les exemples est représenté par le paramètre SPAN qui est égal au rapport (Dp90 - Dp10)/Dp50 dans lequel Dp90, Dp10 et Dp50 représentent le diamètre en dessous duquel se trouvent respectivement 90%, 10% et 50% en poids des particules. Ces diamètres ont été déterminés par tamisage.

### EXEMPLE 1

On se propose de revêtir de polyéthylène la paroi interne et l'agitateur d'un réacteur sphérique de polymérisation. Ce réacteur a une capacité interne de 8,2 litres et est en acier 316L. Ce réacteur est équipé d'une régulation de température et d'un système d'agitation. Le réacteur utilisé est décrit en détail dans le brevet US 4,467,080. Dans ce réacteur, on introduit 100 grammes de poudre de polyéthylène haute densité (PEHD) ayant un Dp50 de 710 µm et un SPAN de 0,9. On introduit ensuite la solution de catalyseur préparé préalablement comme suit :
on met dans un tube de Schlenk purgé à l'azote :
- 20 ml de toluène
- 20 ml d'une solution de méthyllaluminoxane (MAO) dans le toluène à 30% en poids de MAO,
- 200 mg de ZrCp₂Cl₂, Cp représentant un groupe cyclopentadiényle.

On agite le réacteur à 400 révolutions par minute, deux heures à 90°C. On soutire ensuite par une vanne de fond la poudre, on referme le réacteur, et l'on applique 8 bars de pression partielle d'éthylène. On observe que la pression baisse de 2 bars en 1 heure et se stabilise. On décomprime le réacteur, on le purge à l'azote et on ouvre le réacteur. On constate que la paroi interne et l'agitateur du réacteur sont recouverts sur leurs surfaces utiles, c'est-à-dire les surfaces ayant été en contact avec la solution de catalyseur, par un revêtement continu de polyéthylène de haute densité.

La qualité du revêtement est testée de la façon suivante : on charge le réacteur ainsi revêtu par 500 grammes de poudre de polyéthylène de haute densité de Dp50 de 710 µm et de SPAN de 0,9 et on agite le réacteur à 400 tours par minute pendant 7 heures. On ne constate aucune altération du revêtement.

Par ailleurs, l'adhésion du film à la paroi est telle que le film ne se laisse pas arracher par simple tirage.

On peut isoler une partie du revêtement par grattage, ce qui permet de déterminer par pesée que celui-ci présente une épaisseur moyenne de 30 µm.

La masse moléculaire moyenne en poids Mw du polyéthylène constituant le revêtement est de 90200 grammes par mole.

Dans ce qui suit, l'influence du revêtement de polyéthylène sur l'accrochage aux parois d'une poudre de polyéthylène telle que habituellement fabriquée dans un réacteur de polymérisation en phase gazeuse, est décrite.

On charge le réacteur revêtu avec 300 grammes de polyéthylène de haute densité de Dp50 de 700 µm et de SPAN de 0,7, on porte la température du réacteur à 90°C, et l'on ajuste la pression d'azote à 6 bars absolus. On agite l'intérieur du réacteur à 400 révolutions par minutes pendant une heure. On décomprime le réacteur et l'on ouvre la vanne de fond. On récupère ainsi 282 g de poudre. On ouvre ensuite le réacteur et l'on récupère par essuyage des parois et de l'agitateur, 18 g de poudre.

### EXEMPLE 2

On procède comme pour l'exemple 1, sauf que l'on test l'influence du revêtement de polyéthylène sur l'accrochage aux parois d'une poudre de polypropylène isotactique ayant un Dp50 de 540 µm et un SPAN de 1,12 à 70°C.

On récupère par la vanne de fond 287 g de poudre. On récupère par essuyage des parois et de l'agitateur, 13 g de poudre.

### EXEMPLE 3

On se propose de revêtir de polypropylène la paroi interne et l'agitateur d'un réacteur sphérique de polymérisation. Ce réacteur a une capacité interne de 8,2 litres et est en acier 316L. Ce réacteur est équipé d'une régulation de température et d'un système d'agitation. Le réacteur utilisé est décrit en détail dans le brevet US 4,467,080. On applique à l'intérieur du réacteur le traitement de recouvrement dont la description suit.

Dans ce réacteur, on introduit 200 grammes de poudre de polyéthylène haute densité (PEHD) ayant un Dp50 de 1900 µm et un SPAN de 0,6. On introduit ensuite la solution de catalyseur préparé préalablement comme suit :
on met dans un tube de Schlenk purgé à l'azote :
- 40 ml de toluène
- 40 ml d'une solution de méthyllaluminoxane (MAO) dans le toluène à 30% en poids de MAO,
- 600 mg de rac-dichlorure de diméthylsilanediylbisindényl zirconium.

On agite le réacteur à 400 révolutions par minute, deux heures à 70°C. On soutire ensuite par une vanne de fond la poudre, on referme le réacteur, et l'on applique une pression partielle de propylène que l'on maintient à 5 bars par un appoint continu de propylène pendant deux heures. On décomprime le réacteur, on le purge à l'azote et l'on répète le traitement de recouvrement.

On ouvre le réacteur. On constate que la paroi interne et l'agitateur du réacteur sont recouverts sur leurs surfaces utiles, c'est-à-dire les surfaces ayant été en contact avec la solution de catalyseur, par un revêtement continu de polypropylène.

La qualité mécanique du revêtement est testée de la façon suivante : on charge le réacteur ainsi revêtu par 500 grammes de poudre de polyéthylène de haute densité de Dp50 de 710 µm et de SPAN de 0,9 et on agite le réacteur à 400 tours par minute pendant 7 heures. On ne constate aucune altération du revêtement.

Par ailleurs, l'adhésion du film à la paroi est telle que le film ne se laisse pas arracher par simple tirage.

On peut isoler une partie du revêtement par grattage, ce qui permet de l'analyser. On peut déterminer par pesée que celui-ci présente une épaisseur moyenne de 25 µm. Il présente un indice d'isotacticité de 85%, mesuré par RMN, et une masse moléculaire moyenne en poids de 40000 grammes par mole.

Dans ce qui suit, l'influence du revêtement de polypropylène sur l'accrochage aux parois d'une poudre de polypropylène telle que habituellement fabriquée dans un réacteur de polymérisation en phase gazeuse, est décrite.

On charge le réacteur revêtu avec 300 grammes de polypropylène isotactique de Dp50 de 540 µm et de SPAN de 1,12, on porte la température du réacteur à 70°C, et l'on ajuste la pression d'azote à 6 bars absolus. On agite l'intérieur du réacteur à 400 révolutions par minutes pendant une heure. On décomprime le réacteur et l'on ouvre la vanne de fond. On récupère ainsi 290 g de poudre. On ouvre ensuite le réacteur et l'on récupère par essuyage des parois et de l'agitateur, 10 g de poudre.

### EXEMPLE 4

On procède comme pour l'exemple 3, sauf que l'on test l'influence du revêtement de polypropylène sur l'accrochage aux parois d'une poudre de polyéthylène haute densité ayant un Dp50 de 700 µm et un SPAN de 0,7 à 90°C.

On récupère par la vanne de fond 253 g de poudre. On récupère par essuyage des parois et de l'agitateur, 47 g de poudre.

### EXEMPLE 5 (comparatif)

Dans ce qui suit, on procède comme pour l'exemple 1 sauf qu'aucun revêtement de polyéthylène sur la paroi interne du réacteur et sur l'agitateur n'a été réalisé.

On récupère par la vanne de fond 229 g de poudre. On récupère par essuyage des parois et de l'agitateur, 71 g de poudre.

### EXEMPLE 6 (comparatif)

Dans ce qui suit, on procède comme pour l'exemple 3 sauf qu'aucun revêtement de polypropylène sur la paroi interne du réacteur et sur l'agitateur n'a été réalisé.

On récupère par la vanne de fond 192 g de poudre. On récupère par essuyage des parois et de l'agitateur, 108 g de poudre.

### EXEMPLE 7

### a) Fabrication d'un prépolymère :

Dans un réacteur sphérique en acier de 2,5 litres équipé d'un système d'agitation et d'une régulation de température, on introduit après une purge à l'azote:
- 0,5 litre d'hexane
- 2 millimoles de trihexylaluminium (THA)
- 3,5 grammes d'une composante catalytique solide sphéroïdale sur support de chlorure de magnésium contenant 8,4% en poids de titane et 1,8% en poids d'aluminium.

On porte le mélange à 65°C sous agitation et l'on introduit 42 g d'éthylène en 1 heure et 40 minutes. On introduit ensuite 2 millimoles de THA, 1,5 bars d'hydrogène, puis 98 g d'éthylène en 2 heures 20 minutes.

On purge le réacteur à l'azote et l'on évapore le solvant par entrainement à l'azote à 75°C. On obtient ainsi une poudre sèche. On refroidit cette poudre à 20°C et l'on ajoute sous agitation 37,5 millimoles de THA.

On récupère 145 g d'une poudre de prépolymère présentant une bonne coulabilité et que l'on conserve sous azote.

### b) Polymérisation en présence d'un prépolymère :

Dans un réacteur identique à celui de l'exemple 1 revêtu de polyéthylène comme dans l'exemple 1, on introduit après purge à l'azote et à 90°C.
- 50 grammes de poudre de charge provenant d'un essai de polymérisation identique à celui présentement décrit, puis
- 5,75 bars de pression partielle d'hydrogène, puis
- 8 bars de pression partielle d'éthylène, puis puis
- par poussée à l'azote 1,5 grammes d'un prépolymère d'éthylène dont la fabrication a été décrite ci-dessus, la quantité d'azote étant telle que la pression totale dans le réacteur est de 20 bars absolus.

La pression totale est maintenue constante par apport d'éthylène pendant deux heures. Le réacteur est alors décomprimé et refroidit jusqu'à la température ambiante. On récupère par la vanne de fond du réacteur 213 grammes de poudre de polyéthylène de Dp50 de 790 µm et de SPAN de 1,44 et il reste 12 grammes de poudre accroché à la paroi et à l'agitateur dans le réacteur.

**TABLEAU 1**

| POUDRE PE | Poids (g) de poudre P non accrochée | Poids (g) de poudre P accrochée |
|---|---|---|
| avec revêtement PE (exemple 1) | 282 | 18 |
| avec revêtement PP (exemple 4) | 253 | 47 |
| sans revêtement (exemple 5) | 229 | 71 |

**TABLEAU 2**

| POUDRE PP | Poids (g) de poudre P non accrochée | Poids (g) de poudre P accrochée |
|---|---|---|
| avec revêtement PP (exemple 3) | 290 | 10 |
| avec revêtement PE (exemple 2) | 287 | 13 |
| sans revêtement (exemple 6) | 192 | 108 |

## Revendications

1. Procédé d'élaboration d'un revêtement de polyoléfine sur un substrat comprenant les étapes suivantes:
a) mise en contact du substrat avec une composition liquide comprenant un catalyseur de polymérisation des oléfines, puis
b) séparation du substrat du milieu utilisé pour la mise en contact, puis
c) polymérisation en phase gazeuse d'au moins une oléfine en présence dudit substrat.

2. Procédé selon la revendication 1 caractérisé en ce que la composition liquide est une solution de catalyseur comprenant
I. un catalyseur constitué d'un système catalytique comprenant
I.a - un dérivé d'un métal de transition M, et
I.b - un cocatalyseur capable d'activer le métal de transition M
et
Il. un solvant.

3. Procédé selon la revendication 2 caractérisé en ce que le dérivé d'un métal de transition est un composé de formule MLx dans laquelle M représente un métal de transition, L représente au moins un ligand coordiné au métal de transition et x représente un nombre égal à la valence du métal de transition.

4. Procédé selon la revendication 3 caractérisé en ce que au moins un ligand L est un groupement au squelette de type cycloalcadiényle.

5. Procédé selon la revendication 3 ou 4 caractérisé en ce que le métal M est le zirconium.

6. Procédé selon l'une des revendications 2 à 5 caractérisé en ce que le dérivé d'un métal de transition est présent dans la solution de catalyseur à raison de 1 millimole par litre de solution jusqu'à la saturation du solvant, et en particulier de 5 à 50 millimoles par litre de solution.

7. Procédé selon l'une des revendications 2 à 6 caractérisé en ce que le cocatalyseur est un aluminoxane linéaire de formule : 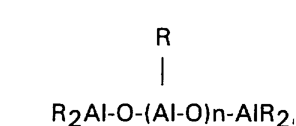 ou cyclique de formule 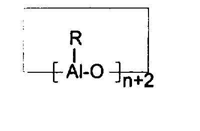 R représentant un radical alkyl comprenant de un à six atomes de carbone, et n représentant un nombre entier allant de 2 à 40, de préférence de 10 à 20.

8. Procédé selon la revendication 7 caractérisé en ce que R représente un groupement méthyle.

9. Procédé selon la revendication 7 ou 8 caractérisé en ce que le cocatalyseur est présent dans la solution de catalyseur en quantité telle que le rapport atomique AI/M aille de 5.10³ à 10.

10. Procédé selon l'une des revendications 2 à 9 caractérisé en ce que le solvant est choisi parmi les hydrocarbures aromatiques éventuellement substitués contenant de 6 à 20 atomes de carbone.

11. Procédé selon la revendication 10 caractérisé en ce que le solvant est le toluène.

12. Procédé selon l'une des revendications 1 à 11 caractérisé en ce que le substrat est en métal.

13. Procédé selon la revendication 12 caractérisé en ce que le métal est un acier.

14. Pièce comprenant un substrat et un revêtement, ledit revêtement étant susceptible d'être obtenu par le procédé de l'une des revendications 1 à 13.

15. Pièce selon la revendication 14 caractérisée en ce que le substrat est en métal.

16. Pièce selon la revendication 15 caractérisée en ce que le métal est un acier.

17. Pièce selon l'une des revendications 14 à 16 caractérisée en ce que le revêtement présente une épaisseur inférieure à 50 µm.

18. Pièce selon la revendication 17 caractérisée en ce que le revêtement présente une épaisseur comprise entre 10 et 50 µm.

19. Pièce selon l'une des revendications 14 à 18 caractérisée en ce que le substrat est une cuve ou un réacteur chimique ou les accessoires internes d'un réacteur chimique.

20. Pièce selon la revendication 19 caractérisée en ce que le substrat est la paroi interne d'un réacteur de polymérisation d'oléfines et le cas échéant ses accessoires internes.

21. Pièce selon la revendication 20 caractérisée en ce que le réacteur est un réacteur de polymérisation des oléfines en phase gazeuse.

22. Utilisation d'une pièce comprenant un substrat et un revêtement, ledit revêtement étant en un polymère comprenant des enchaînements de formule -CH₂-CHR- dans laquelle R représente un atome d'hydrogène ou un radical alkyle contenant de 1 à 10 atomes de carbone, caractérisé en ce que la pièce entre en contact avec des particules de polyoléfine.

23. Utilisation selon la revendication 22 caractérisée en ce que le polymère constituant le revêtement est un polymère ou copolymère d'au moins une oléfine.

24. Utilisation selon la revendication 23 caractérisée en ce que le polymère constituant le revêtement est en polyéthylène.

25. Utilisation selon la revendication 23 caractérisée en ce que le polymère constituant le revêtement est en polypropylène.

26. Utilisation selon l'une des revendications 22 à 25 caractérisée en ce que les particules de polyoléfine sont en polyéthylène.

27. Utilisation selon l'une des revendications 22 à 25 caractérisée en ce que les particules de polyoléfine sont en polypropylène.

28. Utilisation selon l'une des revendications 22 à 27 caractérisé en ce que les particules de polyoléfine sont en présence d'un gaz.

29. Utilisation selon l'une des revendications 22 à 28 caractérisée en ce que la pièce est une cuve ou un réacteur chimique et ses éventuels accessoires internes.

30. Utilisation selon la revendication 29 caractérisée en ce que la pièce est un réacteur de polymérisation ainsi que ses éventuels accessoires internes.

31. Utilisation selon la revendication 30 caractérisée en ce que la pièce est un réacteur de polymérisation de polyoléfines en phase gazeuse ainsi que ses éventuels accessoires internes.

32. Utilisation selon l'une des revendications 22 à 31 caractérisée en ce que le substrat est en métal.

33. Utilisation selon la revendication 32 caractérisée en ce que le métal est un acier.

## Patentansprüche

1. Verfahren zur Herstellung eines Polyolefin-Überzugs auf einem Substrat mit folgenden Schritten:
a) Zusammenbringen des Substrats mit einer flüssigen Zusammensetzung, die einen Katalysator für die Polymerisation von Olefinen enthält, danach
b) Trennung des Substrats von dem für das Zusammenbringen verwendeten Medium, dann
c) Polymerisation in Gasphase mindestens eines Olefins in Gegenwart des genannten Substrats.

2. Verfahren nach Anspruch 1, dadurch gekennzeichnet, daß die flüssige Zusammensetzung eine Katalysatorlösung ist, enthaltend
I. einen Katalysator, der aus einem katalytischen System besteht, enthaltend
I.a - eine Verbindung eines Übergangsmetalls M, und
I.b - einen Cokatalysator, der geeignet ist, das Übergangsmetall M zu aktivieren
und
II. ein Lösungsmittel.

3. Verfahren nach Anspruch 2, dadurch gekennzeichnet, daß die Verbindung des Übergangsmetalls eine Verbindung der Formel MLx ist, in der M ein Übergangsmetall, L mindestens ein an das Übergangsmetall gebundener Ligand und x eine Zahl gleich der Wertigkeit des Übergangsmetalls bedeutet.

4. Verfahren nach Anspruch 3, dadurch gekennzeichnet, daß mindestens ein Ligand L eine Gruppierung am Cycloalkadienyl-Gerüst ist.

5. Verfahren nach Anspruch 3 oder 4, dadurch gekennzeichnet, daß das Metall M Zirkonium ist.

6. Verfahren nach einem der Ansprüche 2 bis 5, dadurch gekennzeichnet, daß die Verbindung eines Übergangsmetalls in der Katalysatorlösung in einer Menge von 1 Millimol pro Liter der Lösung, insbesondere von 5 bis 50 Millimol pro Liter der Lösung, bis zur Sättigung des Lösungsmittels vorliegt.

7. Verfahren nach einem der Ansprüche 2 bis 6, dadurch gekennzeichnet, daß der Cokatalysator ein lineares Aluminoxan ist der Formel: 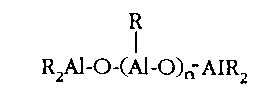 oder ein cyclisches Aluminoxan der Formel 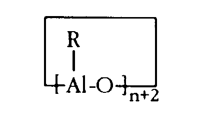 ist, in der R einen Alkylrest mit 1 bis 6 Kohlenstoffatomen und n eine ganze Zahl von 2 bis 40, vorzugsweise von 10 bis 20, bedeutet.

8. Verfahren nach Anspruch 7, dadurch gekennzeichnet, daß R eine Methylgruppe bedeutet.

9. Verfahren nach Anspruch 7 oder 8, dadurch gekennzeichnet, daß der Cokatalysator in der Katalysatorlösung in einer solchen Menge vorliegt, daß das atomare Verhältnis AI/M zwischen 5•10³ und 10 liegt.

10. Verfahren nach einem der Ansprüche 2 bis 9, dadurch gekennzeichnet, daß das Lösungsmittel aus den gegebenenfalls substituierten und 6 bis 20 Kohlenstoffatome enthaltenden aromatischen Kohlenwasserstoffen gewählt ist.

11. Verfahren nach Anspruch 10, dadurch gekennzeichnet, daß das Lösungsmittel Toluol ist.

12. Verfahren nach einem der Ansprüche 1 bis 11, dadurch gekennzeichnet, daß das Substrat aus Metall ist.

13. Verfahren nach Anspruch 12, dadurch gekennzeichnet, daß das Metall ein Stahl ist.

14. Erzeugnis, das ein Substrat und einen Überzug enthält, wobei der genannte Überzug durch das Verfahren nach einem der Ansprüche 1 bis 13 erhalten werden kann.

15. Erzeugnis nach Anspruch 14, dadurch gekennzeichnet, daß das Substrat aus Metall besteht.

16. Erzeugnis nach Anspruch 15, dadurch gekennzeichnet, daß das Metall ein Stahl ist.

17. Erzeugnis nach einem der Ansprüche 14 bis 16, dadurch gekennzeichnet, daß der Überzug eine Dicke von weniger als 50 µm hat.

18. Erzeugnis nach Anspruch 17, dadurch gekennzeichnet, daß der Überzug eine Dicke zwischen 10 und 50 µm hat.

19. Erzeugnis nach einem der Ansprüche 14 bis 18, dadurch gekennzeichnet, daß das Substrat ein Gefäß oder ein chemisches Reaktionsgefäß oder ein Teil im Inneren eines chemischen Reaktionsgefäßes ist.

20. Erzeugnis nach Anspruch 19, dadurch gekennzeichnet, daß das Substrat die Innenwand eines Reaktors für die Polymerisation von Olefinen ist und gegebenenfalls dessen innere Aggregate ist.

21. Erzeugnis nach Anspruch 20, dadurch gekennzeichnet, daß der Reaktor ein Reaktionsgefäß zur Polymerisation von Olefinen in Gasphase ist.

22. Verwendung eines ein Substrat und einen Überzug enthaltenden Erzeugnisses, wobei der genannte Überzug aus einem Polymeren besteht, das Verkettungen der Formel -CH₂-CHR- enthält, in der R ein Wasserstoffatom oder einen Alkylrest mit 1 bis 10 Kohlenstoffatomen bedeutet, dadurch gekennzeichnet, daß das Erzeugnis mit Polyolefinteilchen in Kontakt gebracht wird.

23. Verwendung nach Anspruch 22, dadurch gekennzeichnet, daß das den Überzug bildende Polymere ein Polymeres oder Copolymeres mindestens eines Olefins ist.

24. Verwendung nach Anspruch 23, dadurch gekennzeichnet, daß das den Überzug bildende Polymere aus Polyethylen ist.

25. Verwendung nach Anspruch 23, dadurch gekennzeichnet, daß das den Überzug bildende Polymere aus Polypropylen ist.

26. Verwendung nach einem der Ansprüche 22 bis 25, dadurch gekennzeichnet, daß die Polyolefinteilchen aus Polyethylen sind.

27. Verwendung nach einem der Ansprüche 22 bis 25, dadurch gekennzeichnet, daß die Polyolefinteilchen aus Polypropylen sind.

28. Verwendung nach einem der Ansprüche 22 bis 27, dadurch gekennzeichnet, daß die Polyolefinteilchen in Gegenwart eines Gases vorliegen.

29. Verwendung nach einem der Ansprüche 22 bis 28, dadurch gekennzeichnet, daß das Erzeugnis ein Gefäß oder ein chemisches Reaktionsgefäß ist und gegebenenfalls dessen innere Aggregate ist.

30. Verwendung nach Anspruch 29, dadurch gekennzeichnet, daß das Erzeugnis ein Reaktionsgefäß zur Polymerisation ist sowie gegebenenfalls dessen innere Aggregate ist.

31. Verwendung nach Anspruch 30, dadurch gekennzeichnet, daß das Erzeugnis ein Reaktionsgefäß zur Polymerisation von Polyolefinen in Gasphase ist sowie gegebenenfalls dessen innere Aggregate ist.

32. Verwendung nach einem der Ansprüche 22 bis 31, dadurch gekennzeichnet, daß das Substrat aus Metall ist.

33. Verwendung nach Anspruch 32, dadurch gekennzeichnet, daß das Metall ein Stahl ist.

## Claims

1. Process for producing a polyolefin coating on a substrate, which includes the following stages:
a) bringing the substrate into contact with a liquid composition including a catalyst of olefin polymerization, then
b) separation of the substrate from the medium used for bringing the above into contact, then
c) gas-phase polymerization of at least one olefin in the presence of the said substrate.

2. Process according to Claim 1, characterized in that the liquid composition is a solution which includes
I. a catalyst consisting of a catalyst system including
I.a - a derivative of a transition metal M, and
I.b - a cocatalyst capable of activating the transition metal M
and
II. a solvent.

3. Process according to Claim 2, characterized in that the derivative of a transition metal is a compound of formula MLₓ in which M denotes a transition metal, L denotes at least one ligand coordinated to the transition metal and x denotes a number equal to the valency of the transition metal.

4. Process according to Claim 3, characterized in that at least one ligand L is a group with a structure of the cycloalkadienyl type.

5. Process according to Claim 3 or 4, characterized in that the metal M is zirconium.

6. Process according to one of Claims 2 to 5, characterized in that the derivative of a transition metal is present in the catalyst solution in a proportion of 1 millimole per litre of solution up to the saturation of the solvent, and in particular of 5 to 50 millimoles per litre of solution.

7. Process according to one of Claims 2 to 6, characterized in that the cocatalyst is a linear aluminoxane of formula 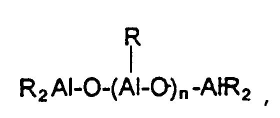 or a cyclic one of formula 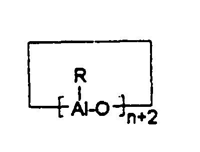 R denoting an alkyl radical containing from one to six carbon atoms and n denoting an integer ranging from 2 to 40, preferably from 10 to 20.

8. Process according to Claim 7, characterized in that R denotes a methyl group.

9. Process according to Claim 7 or 8, characterized in that the cocatalyst is present in the catalyst solution in a quantity such that the Al/M atomic ratio ranges from 5×10³ to 10.

10. Process according to one of Claims 2 to 9, characterized in that the solvent is chosen from optionally substituted aromatic hydrocarbons containing from 6 to 20 carbon atoms.

11. Process according to Claim 10, characterized in that the solvent is toluene.

12. Process according to one of Claims 1 to 11, characterized in that the substrate is made of metal.

13. Process according to Claim 12, characterized in that the metal is a steel.

14. Item including a substrate and a coating, the said coating being capable of being obtained by the process of one of Claims 1 to 13.

15. Item according to Claim 14, characterized in that the substrate is made of metal.

16. Item according to Claim 15, characterized in that the metal is a steel.

17. Item according to one of Claims 14 to 16, characterized in that the coating has a thickness of less than 50 µm.

18. Item according to Claim 17, characterized in that the coating has a thickness of between 10 and 50 µm.

19. Item according to one of Claims 14 to 18, characterized in that the substrate is a vessel or a chemical reactor or the internal accessories of a chemical reactor.

20. Item according to Claim 19, characterized in that the substrate is the inner wall of a reactor for olefin polymerization and, if appropriate, its internal accessories.

21. Item according to Claim 20, characterized in that the reactor is a reactor for gas-phase olefin polymerization.

22. Use of an item including a substrate and a coating, the said coating being made of a polymer including chain sequences of formula -CH₂-CHR- in which R denotes a hydrogen atom or an alkyl radical containing from 1 to 10 carbon atoms, characterized in that the item comes into contact with polyolefin particles.

23. Use according to Claim 22, characterized in that the polymer constituting the coating is a polymer or copolymer of at least one olefin.

24. Use according to Claim 23, characterized in that the polymer constituting the coating is made of polyethylene.

25. Use according to Claim 23, characterized in that the polymer constituting the coating is made of polypropylene.

26. Use according to one of Claims 22 to 25, characterized in that the polyolefin particles are made of polyethylene.

27. Use according to one of Claims 22 to 25, characterized in that the polyolefin particles are made of polypropylene.

28. Use according to one of Claims 22 to 27, characterized in that the polyolefin particles are in the presence of a gas.

29. Use according to one of Claims 22 to 28, characterized in that the item is a vessel or a chemical reactor and its optional internal accessories.

30. Use according to Claim 29, characterized in that the item is a polymerization reactor and its optional internal accessories.

31. Use according to Claim 30, characterized in that the item is a reactor for gas-phase polyolefin polymerization and its optional internal accessories.

32. Use according to one of Claims 22 to 31, characterized in that the substrate is made of metal.

33. Use according to Claim 32, characterized in that the metal is a steel.
